(19)

Europäisches
Patentamt
European
Patent Office
Office européen
des brevets

(11) **EP 4 246 461 A1**

(12) # EUROPEAN PATENT APPLICATION

(43) Date of publication:
**20.09.2023 Bulletin 2023/38**

(21) Application number: **22186669.2**

(22) Date of filing: **25.07.2022**

(51) International Patent Classification (IPC):
**G06V 10/84** (2022.01)    **G06V 10/74** (2022.01)
**G06V 10/80** (2022.01)    **G06V 10/762** (2022.01)

(52) Cooperative Patent Classification (CPC):
**G06V 10/85; G06V 10/761; G06V 10/763;
G06V 10/809**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.03.2022 TW 111110045**

(71) Applicant: **Quanta Computer Inc.
Taoyuan City 333 (TW)**

(72) Inventors:
• **CHANG, Chia-Yuan
  333 Taoyuan City (TW)**
• **CHENG, Kai-Ju
  333 Taoyuan City (TW)**

• **CHEN, Yu-Hsun
  333 Taoyuan City (TW)**
• **LEE, Hao-Ping
  333 Taoyuan City (TW)**
• **HSU, Tong-Ming
  333 Taoyuan City (TW)**
• **TING, Chin-Yuan
  333 Taoyuan City (TW)**
• **CHEN, Shao-Ang
  333 Taoyuan City (TW)**
• **CHEN, Kuan-Chung
  333 Taoyuan City (TW)**

(74) Representative: **Michalski Hüttermann & Partner
Patentanwälte mbB
Kaistraße 16A
40221 Düsseldorf (DE)**

(54) **IMAGE CLASSIFYING DEVICE AND METHOD**

(57)    An image classifying device is provided in the invention. The image classifying device includes a storage device, a calculation circuit and a classifying circuit. The storage device stores information corresponding to a plurality of image classes. The calculation circuit obtains a target image from an image extracting device and obtains the feature vector of the target image. The calculation circuit obtains a first estimation result corresponding to the target image based on the information corresponding to the plurality of image classes and the feature vector and obtains a second estimation result corresponding to the target image based on a reference image, wherein the reference image corresponds to one of the image classes. The classifying circuit adds the target image into one of the image classes based on the first estimation result and the second estimation result.

**Description**

**CROSS REFERENCE TO RELATED APPLICATIONS**

This Application claims priority of TW Patent Application No. 111110045 filed on March 18, 2022, the entirety of which is incorporated by reference herein.

**BACKGROUND OF THE INVENTION**

**Field of the Invention**

The invention generally relates to image classifying technology, and more particularly, to an image classifying technology in which image classification is performed based on the result of comparing the target image to a plurality of classified images and the other result for the target image generated based on the the Hidden Markov Model (HMM) algorithm.

**Description of the Related Art**

As technology has progressed, image classification is being applied more widely. Therefore, how to classify images more accurately is a subject that is worthy of discussion.

**BRIEF SUMMARY OF THE INVENTION**

An image classifying device and method are provided to overcome the problems mentioned above.

An embodiment of the invention provides an image classifying device. The image classifying device includes a storage device, a calculation circuit, and a classifying circuit. The storage device stores information corresponding to a plurality of image classes. The calculation circuit is coupled to the storage device. The calculation circuit obtains a target image from an image extracting device and obtains the feature vector of the target image. In addition, the calculation circuit obtains a first estimation result corresponding to the target image based on the information corresponding to the plurality of image classes and the feature vector and obtains a second estimation result corresponding to the target image based on a reference image, wherein the reference image corresponds to one of the image classes. The classifying circuit is coupled to the calculation circuit. The classifying circuit adds the target image into one of the image classes based on the first estimation result and the second estimation result.

In some embodiments of the invention, each image class comprises a plurality of groups of images. In some embodiments of the invention, the calculation circuit calculates the shortest distances between the feature vector and each image class based on the feature vector and each cluster centroid of each group of each image class. When the minimum value of the shortest distances between the feature vector and each image class is above the threshold, the calculation circuit abandons the target image. When the minimum value of the shortest distances between the feature vector and each image class is not above the threshold, the calculation circuit calculates the first estimation result based on the shortest distances between the feature vector and each image class and a probability distribution algorithm.

In some embodiments of the invention, the classifying circuit multiplies the first estimation result by the second estimation result to obtain a third estimation result, and adds the target image into one of the image classes based on the third estimation result.

In some embodiments of the invention, the classifying circuit multiplies the first estimation result by a first weighted value to generate a first result and multiplies the second estimation result by a second weighted value to generate a second result, and the classifying circuit adds the first result to the second result to generate a third estimation result and adds the target image into one of the image classes based on the third estimation result.

In some embodiments of the invention, after the classifying circuit adds the target image into one of the image classes, the classifying circuit updates the information of the image class which the target image is added into.

An embodiment of the invention provides an image classifying method. The image classifying method is applied to an image classifying device. The image classifying method includes the following steps. The image classifying device obtains a target image from an image extracting device. The calculation circuit of the image classifying device obtains the feature vector of the target image. The calculation circuit obtains a first estimation result corresponding to the target image based on the information corresponding to the image classes and the feature vector. The calculation circuit obtains a second estimation result corresponding to the target image based on a reference image. The reference image corresponds to one of the image classes. The classifying circuit of the image classifying device adds the target image into one of the image classes based on the first estimation result and the second estimation result.

Other aspects and features of the invention will become apparent to those with ordinary skill in the art upon review of the following descriptions of specific embodiments of an image classifying device and method.

**BRIEF DESCRIPTION OF THE DRAWINGS**

The invention will become more fully understood by referring to the following detailed description with reference to the accompanying drawings, wherein:

FIG. 1 is a block diagram of an image classifying device 100 according to an embodiment of the invention; and

FIG. 2 is a flow chart illustrating an image classifying method according to an embodiment of the invention.

**DETAILED DESCRIPTION OF THE INVENTION**

The following description is of the best-contemplated mode of carrying out the invention. This description is made for the purpose of illustrating the general principles of the invention and should not be taken in a limiting sense. The scope of the invention is best determined by reference to the appended claims.

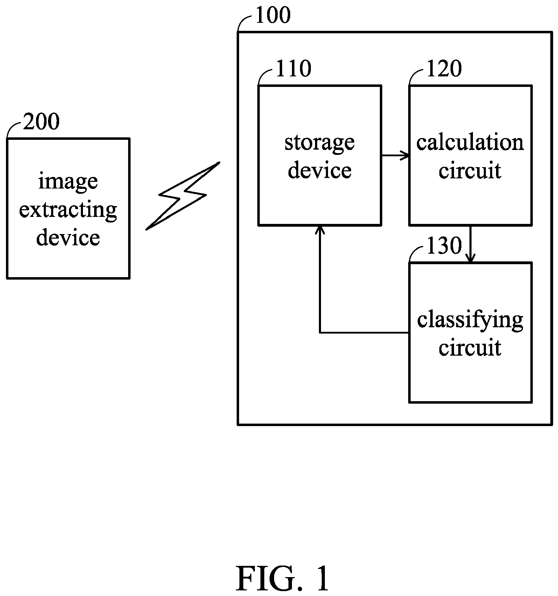

FIG. 1 is a block diagram of an image classifying device 100 according to an embodiment of the invention. As shown in FIG. 1, the image classifying device 100 may comprise a storage device 110, a calculation circuit 120 and a classifying circuit 130. It should be noted that FIG. 1 presents a simplified block diagram in which only the elements relevant to the invention are shown. However, the invention should not be limited to what is shown in FIG. 1. The image classifying device 100 may also comprise other elements and the connections between the elements may be different from the image classifying device 100. According to an embodiment of the invention, the calculation circuit 120 and the classifying circuit 130 may be integrated in a single chip or module. In another embodiment, the storage device 110, the calculation circuit 120 and the classifying circuit 130 may also be integrated in a single chip or module.

According to the embodiments of the invention, the storage device 110 may be a volatile memory (e.g. Random Access Memory (RAM)), or a non-volatile memory (e.g. flash memory, Read Only Memory (ROM)), a hard disk, or a combination of the above memory devices. The storage device 110 may store the required files and data for the image classification.

According to the embodiments of the invention, the storage device 110 may store a plurality of image classes of images in advance. According to an embodiment of the invention, each image class may correspond to a corresponding area, e.g. different areas of oral cavity, but the invention should not be limited thereto. In addition, according to the embodiments of the invention, the images in each image class may be divided into different groups based on a clustering algorithm in advance.

According to an embodiment, the clustering algorithm may be a k-means algorithm, but the invention should not be limited thereto. In the k-means algorithm, the user may pre-decide to how many groups the images in each image class need to be divided into (i.e. pre-decide a number of the groups in each image class). In addition, in the k-means algorithm, each group may correspond to a cluster centroid. That is to say, the number of the cluster centroids may be the same as the number of the groups.

According to an embodiment of the invention, the image classifying device 100 may obtain a target image from an image extracting device 200 (i.e. the target image may be an image captured by the image extracting device 200 at the current time point) and add the target image into a suitable image class. In the embodiments of the invention, at different time points, the image extracting device 200 may be moved to different positions to capture the images corresponding to different image class (or different areas). Details for how to add the target image into a suitable image class are discussed below.

According to an embodiment of the invention, when the target image is added into the suitable image class, the calculation circuit 120 may extract a feature vector of the target image first. In an embodiment, the calculation circuit may input the target image into a deep learning algorithm model to obtain the feature vector corresponding to the target image. In the embodiment, the deep learning algorithm may be a Convolutional Neural Network (CNN) algorithm (e.g. MobileNet, EfficiebtNet, TetNet and so on), but the invention should not be limited thereto.

After the calculation circuit 120 obtains the feature vector corresponding to the target image, the calculation circuit 120 may calculate the distances between the feature vector and each cluster centroid of each group of each image class, and select the shortest distances between the feature vector and each image class (i.e. the feature vector and one image class correspond to a corresponding shortest distance). For example, if the storage device 110 stores $N$ image classes and each image class comprise $M$ groups, and the feature vector of the target image is indicated as $v$, the shortest distance between the feature vector and each image class can be indicated as:

$$D_{v,n} = \min\left(d_{v,1}, d_{v,2}, \ldots d_{v,m}\right), n\epsilon\{1,2,,\ldots N\}, m\epsilon\{1,2,\ldots M\},$$

wherein $D_{v,n}$ means the shortest distance between the feature vector v and the n-th image class, and $d_{v,m}$ means the distance between the feature vector v and each cluster centroid of each group in the n-th image class.

According to an embodiment of the invention, the calculation circuit 120 may determine whether the minimum value of the shortest distances between the feature vector of the target image and each image class is above the threshold.

According to an embodiment, the threshold may be calculated based on the interquartile range (IQR) algorithm, but the invention should not be limited thereto. Specifically, the distances between each image stored in the storage device 110 and its corresponding cluster centroid can be calculated in advance. Then, based on the IQR algorithm, a statistic is performed for the distances between each image and its corresponding cluster centroid to obtain a first quartile Q1, a second quartile Q2, a third quartile Q3 and interquartile range (IQR) (i.e. IQR= Q3-Q1) in the IQR algorithm. In one preferred embodiment, the threshold may be defined as (Q3+1.5*IQR).

If the minimum value of the shortest distances between the feature vector of the target image and each image class is above the threshold (i.e. the target image is not similar to any image class), the calculation circuit 120 may determine that the target image is a defective image and abandon the target image. Taking the above equation as an example, if the $D_{v,n}$ = min($d_{v,1}$, $d_{v,2}$, ... $d_{v,m}$)>threshold, the calculation circuit 120 may abandon the target image.

If the minimum value of the shortest distances between the feature vector of the target image and each image class is not above the threshold, the calculation circuit 120 may use a probability distribution algorithm to perform a probability distribution calculation for the feature vector of the target image and the reciprocals of all the shortest distances corresponding to the image classes to obtain the probabilities (i.e. the first estimation result) of the target image for each image class.

According to an embodiment of the invention, the probability distribution algorithm may be the softmax algorithm, but the invention should not be limited thereto. The softmax algorithm may transforms the values (i.e. shortest distance) of different classes to the values in the interval [0,1], and sum of the transformed values will be 1. Taking the above equation as an example, after the softmax algorithm, the probabilities (i.e. the first estimation result) of the target image for each image class can be indicated as follow:

$$\{p_{i,1}, p_{i,2} \dots, p_{i,N}\} = softmax(\frac{1}{D_{v,1}}, \frac{1}{D_{v,2}}, \dots, \frac{1}{D_{v,N}}),$$

wherein $\{p_{i,1}, p_{i,2} \dots, p_{i,N}\}$ refers to the probabilities of the target image i for each image class n ($n \in \{1,2, , \dots N\}$).

According to an embodiment of the invention, the calculation circuit 120 may also use the Hidden Markov Model (HMM) algorithm and a reference image to calculate the probabilities (i.e. the second estimation result) between the target image and the image classes. According to an embodiment of the invention, comparing with the target image at the current time point, the reference image can be regarded as a target image at a previous time point, and the image class corresponding to the reference image may be one of the image classes stored in the storage device 110. For example, the reference image may be the target image at time point t-1 and its corresponding image class (or area) is known (i.e. image class of the reference has been estimated). Therefore, the reference image and the image class corresponding to the reference image can be used to estimate the probabilities between the target image and the image classes at the current time point. (i.e. the calculation circuit 120 may estimate the probabilities of the image extracting device 200 moving from the image class (or area) corresponding to the reference image to each image class (or area) during the time point t-1 (corresponding to the reference image) to the current time point t (corresponding to the target image)).

According to an embodiment of the invention, the storage device 110 may further store the moving probabilities between each image class (or area) and other image classes (or areas). Specifically, a moving probability between one image class and another image class means the probability of the image extracting device 200 moving from one area to another area when the image extracting device 200 captures images at continuous time points. The calculation circuit 120 may use the HMM algorithm to obtain the probabilities (i.e. the second estimation result) between the target image and the image classes based on the moving probabilities between each image class (or area) and other image classes (or areas) and the image class (or area) corresponding to the reference image.

According to another embodiment of the invention, the storage devices 110 may further store the distance information between each image class (or area) and other image classes (or areas). Specifically, the distance $Z_{i,j}$ between each image class (or area) and other image classes (or areas) may be measured in advance, wherein the distance $Z_{i,j}$ means the distance of moving from the area i to the area j. In addition, in the embodiment, the calculation circuit 120 may obtain shift information between the target image and the reference image according to a first algorithm.

In an embodiment, the first algorithm may be an image comparison algorithm (e.g. the feature comparison algorithm). In the embodiment, the calculation circuit 120 may compare the features of the target image with the features of the reference image to calculate the shift pixels of the features. After the calculation circuit 120 obtains the shift pixels, the positioning circuit 120 may estimate the distance variance d (i.e. the shift information) between the target image and the reference image based on the proportional relation between the pixel and the distance.

In another embodiment, the first algorithm may be an IMU algorithm. In the embodiment, the calculation circuit 120 may obtain the acceleration variance and the time variance between the target image and the reference image according to the IMU information of the target image and the IMU information of the reference image. Then, the calculation circuit 120 may estimate the distance variance d (i.e. the shift information) between the target image and the reference image according to the acceleration variance and the time variance.

After the calculation circuit 120 obtains the shift information, the calculation circuit 120 may use the HMM algorithm to obtain the probabilities (i.e. the second estimation result) between the target image and the image classes according to the distance information (i.e. $Z_{i,j}$) between each image class (or area) and other image classes (or areas), the image class (or area) (e.g. the area i) of the reference image and the shift information (i.e. the distance variance d) between the target image and the reference image. Specifically, the positioning circuit 120 may substitute the difference of the distance variance d and the distance information $Z_{i,j}$ (i.e. $|d - Z_{i,j}|$) into a probability density function to generate a distribution diagram (i.e. the second estimation result). For example, the positioning circuit 120 may substitute the difference of the distance variance d and the distance information $Z_{i,j}$ (i.e. $|d - Z_{i,j}|$) into an exponential distribution function:

$$f(x;\lambda) = \begin{cases} \lambda e^{-\lambda x}, & x \geq 0 \\ 0, & x < 0 \end{cases},$$

wherein the calculation circuit 120 may regard the difference of the distance variance d and the distance information $Z_{i,j}$ (i.e. $|d - Z_{i,j}|$) as the input x of the exponential distribution function. In the embodiment, when the difference of the distance variance d and the distance information $Z_{i,j}$ (i.e. $|d - Z_{i,j}|$) is smaller, it means that the probability of moving from the area i (i.e. the area corresponding to the reference image) to the area j (i.e. the possible area corresponding to the target image) is higher. Therefore, the calculation circuit 120 may estimate the probabilities (i.e. the second estimation result) between the target image and the image classes based on the method of the embodiment.

According to another embodiment of the invention, the storage device 110 may further store the angle information between each image class (or area) and other image classes (or areas). Specifically, the angle $r_{i,j}$ between each image class (or area) and other image classes (or areas) may be measured in advance, and stored in the storage device 110, wherein the angle $r_{i,j}$ means the angle of moving from the area i to the area j. In addition, in the embodiment, the calculation circuit 120 may obtain angle variation information between the target image and the reference image according to a second algorithm.

In an embodiment, the second algorithm may be an IMU algorithm. In the embodiment, the calculation circuit 120 may obtain the acceleration variance and the time variance between the target image and the reference image according to the IMU information of the target image and the IMU information of the reference image. Then, the calculation circuit 120 may estimate the rotation angle variance c (i.e. the angle variation information) between the target image and the reference image according to the acceleration variance and the time variance.

After the calculation circuit 120 obtains the angle variation information, the calculation circuit 120 may use the HMM algorithm to obtain probabilities (i.e. the second estimation result) between the target image and the image classes according to the angle information (i.e. $r_{i,j}$) between each image class (or area) and other image classes (or areas), the image class of the reference image (e.g. the area i) and the angle variance information (i.e. the rotation angle variance c) between the target image and the reference image. Specifically, the calculation circuit 120 may substitute the difference of the rotation angle variance c and the angle information $r_{i,j}$ (i.e. $|c - r_{i,j}|$) into a probability density function to generate a distribution diagram (i.e. the second estimation result). For example, the calculation circuit 120 may substitute the difference of the rotation angle variance c and the angle information $r_{i,j}$ (i.e. $|c - r_{i,j}|$) into an exponential distribution function:

$$f(x;\lambda) = \begin{cases} \lambda e^{-\lambda x}, & x \geq 0 \\ 0, & x < 0 \end{cases},$$

wherein the calculation circuit 120 may regard the difference of the rotation angle variance c and the angle information $r_{i,j}$ (i.e. $|c - r_{i,j}|$) as the input x of the exponential distribution function. In the embodiment, when the difference of the rotation angle variance c and the angle information $r_{i,j}$ (i.e. $|c - r_{i,j}|$) is smaller, it means that the probability of moving from the area i (i.e. the area corresponding to the reference image) to the area j (i.e. the possible area corresponding to the target image) is higher. Therefore, the calculation circuit 120 may estimate the probabilities (i.e. the second estimation result) between the target image and the image classes based on the method of the embodiment.

According to an embodiment of the invention, after the calculation circuit 120 obtains the first estimation result and the second estimation result, the classifying circuit 130 may multiply the first estimation result by the second estimation result to obtain a third estimation result. Then, based on the maximum of the third estimation result, the classifying circuit 130 may add the target image into the image class corresponding to the maximum of the third estimation result (i.e. the most possible image class corresponding to the target image). For example, if the first estimation result is $\{p_{i,1}, p_{i,2}, ..., p_{i,N}\}$ and the second estimation result is $\{h_{i,1}, h_{i,2}, ..., h_{i,N}\}$, the third estimation result and the maximum of the third estimation result can be indicated as follow:

$$P_{i,n} = p_{i,n} \times h_{i,n}, n \in \{1,2,...,N\},$$

$$C_i = argmax(P_{i,1}, P_{i,2}, ..., P_{i,N}),$$

wherein $P_{i,n}$ means the third estimation result of target image $i$, and $C_i$ means the maximum of the third estimation result.

According to another embodiment of the invention, after the calculation circuit 120 obtains the first estimation result and the second estimation result, the classifying circuit 130 may multiply the first estimation result by a first weighted value to generate a first result and multiply the second estimation result by a second weighted value to generate a second result. Then, the classifying circuit 130 may add the first result to the second result to obtain a third estimation result. Finally, based on the maximum of the third estimation result, the classifying circuit 130 may add the target image into the image class corresponding to the maximum of the third estimation result (i.e. the most possible image class corresponding to the target image). For example, if the first estimation result is $\{p_{i,1}, p_{i,2}, ..., p_{i,N}\}$ and the second estimation result is $\{h_{i,1}, h_{i,2}, ..., h_{i,N}\}$, the third estimation result and the maximum of the third estimation result can be indicated as follow:

$$P_{i,n} = w_1 \times p_{i,n} + w_2 \times h_{i,n}, n \in \{1,2,...,N\},$$

$$C_i = argmax(P_{i,1}, P_{i,2}, ..., P_{i,N}),$$

wherein $P_{i,n}$ means the third estimation result of target image $i$, $w_1$ means the first weighted value, $w_{21}$ means the second weighted value and $C_i$ means the maximum of the third estimation result.

According to an embodiment of the invention, after the classifying circuit 130 adds the target image into the image class corresponding to the maximum of the third estimation result, the classifying circuit 130 may use a clustering algorithm (e.g. k-means algorithm) to update the information corresponding to the image class which the target image is added into. For example, when the target image is added to an image class, the cluster centroid of each group in the image class may be changed to increase the accuracy of determine the image class of the next target image.

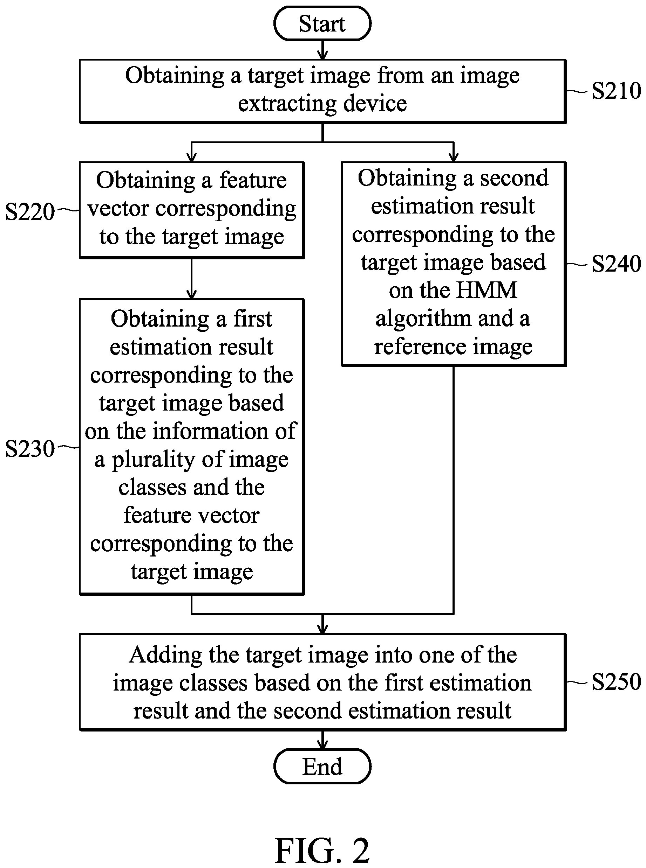

FIG. 2 is a flow chart illustrating an image classifying method according to an embodiment of the invention. The image classifying method can be applied to the image classifying device 100. As shown in FIG. 2, in step S210, the image classifying device 100 obtains a target image from an image extracting device.

In step S220, the calculation circuit of the image classifying device 100 obtains a feature vector corresponding to the target image.

In step S230, the calculation circuit of the image classifying device 100 obtains a first estimation result corresponding to the target image based on the information of a plurality of image classes and the feature vector corresponding to the target image.

In step S240, the calculation circuit of the image classifying device 100 obtains a second estimation result corresponding to the target image based on the Hidden Markov Model (HMM) algorithm and a reference image, wherein the reference image corresponds one of the image classes.

In step S250, the classifying circuit of the image classifying device 100 adds the target image into one of the image classes based on the first estimation result and the second estimation result.

According to an embodiment of the invention, in the image classifying method, each image class may comprise a plurality of groups of images.

According to an embodiment of the invention, in step S230, the calculation circuit of the image classifying device 100 may calculate the shortest distances between the feature vector and each image class based on the feature vector corresponding to the target image and each cluster centroid of each group of each image class.

According to an embodiment of the invention, in the image classifying method, when the minimum value of the shortest distances between the feature vector of the target image and each image class is above the threshold, the calculation circuit of the image classifying device 100 may abandon the target image. When the minimum value of the shortest distances between the feature vector of the target image and each image class is not above the threshold, the calculation circuit of the image classifying device 100 may calculate the first estimation result based on the shortest distances between the feature vector of the target image and each image class and a probability distribution algorithm.

According to an embodiment of the invention, in step S450 of the image classifying method, the classifying circuit of the image classifying device 100 may multiply the first estimation result by the second estimation result to obtain a third estimation result, and it may add the target image into one of the image classes based on the third estimation result.

According to an embodiment of the invention, in step S450 of the image classifying method, the classifying circuit of the image classifying device 100 may multiply the first estimation result by a first weighted value to generate a first result and multiply the second estimation result by a second weighted value to generate a second result. Then, the classifying circuit of the image classifying device 100 may add the first result to the second result to generate a third estimation result, and it may add the target image into one of the image classes based on the third estimation result.

According to an embodiment of the invention, in the image classifying method, after the target image is added to one of the image classes, the classifying circuit of the image classifying device 100 may update the information of the image class which the target image is added into.

According to the image classifying method provided in the invention, the image classifying device can obtain the image class corresponding to the target image accurately. In addition, according to the image classifying method provided in the invention, the image classifying device can update the information corresponding to each image class to increase the accuracy of later image classification.

Use of ordinal terms such as "first", "second", "third", etc., in the disclosure and claims is for description. It does not by itself connote any order or relationship.

The steps of the method described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such that the processor can read information (e.g., code) from and write information to the storage medium. A sample storage medium may be integral to the processor. The processor and the storage medium may reside in an ASIC. The ASIC may reside in user equipment. Alternatively, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

The above paragraphs describe many aspects. Obviously, the teaching of the invention can be accomplished by many methods, and any specific configurations or functions in the disclosed embodiments only present a representative condition. Those who are skilled in this technology will understand that all of the disclosed aspects in the invention can be applied independently or be incorporated.

While the invention has been described by way of example and in terms of preferred embodiment, it should be understood that the invention is not limited thereto. Those who are skilled in this technology can still make various alterations and modifications without departing from the scope and spirit of this invention. Therefore, the scope of the present invention shall be defined and protected by the following claims and their equivalents.

**Claims**

1. An image classifying device, comprising:

   a storage device, storing information corresponding to a plurality of image classes;
   a calculation circuit, coupled to the storage device, obtaining a target image from an image extracting device and obtaining a feature vector of the target image, wherein the calculation circuit obtains a first estimation result corresponding to the target image based on the information corresponding to the plurality of image classes and the feature vector and wherein the calculation circuit obtains a second estimation result corresponding to the target image based on a reference image, wherein the reference image corresponds to one of the plurality of image classes; and
   a classifying circuit, coupled to the calculation circuit, wherein the classifying circuit adds the target image into one of the plurality of image classes based on the first estimation result and the second estimation result.

2. The image classifying device of claim 1, wherein each image class comprises a plurality of groups of images.

3. The image classifying device of claim 2, wherein the calculation circuit calculates shortest distances between the feature vector and each image class based on the feature vector and each cluster centroid of each group of each image class.

4. The image classifying device of claim 3, wherein when a minimum value of the shortest distances between the feature vector and each image class is above a threshold, the calculation circuit abandons the target image.

5. The image classifying device of claim 3, wherein when a minimum value of the shortest distances between the feature vector and each image class is not above a threshold, the calculation circuit calculates the first estimation result based on the shortest distances between the feature vector and each image class and a probability distribution algorithm.

6. The image classifying device of any of claims 1 to 5, wherein the classifying circuit multiplies the first estimation result by the second estimation result to obtain a third estimation result, and adds the target image into one of the plurality of image classes based on the third estimation result.

7. The image classifying device of any of claims 1 to 6, wherein the classifying circuit multiplies the first estimation result by a first weighted value to generate a first result and multiplies the second estimation result by a second weighted value to generate a second result, and the classifying circuit adds the first result to the second result to generate a third estimation result and adds the target image into one of the plurality of image classes based on the third estimation result.

8. The image classifying device of any of claims 1 to 7, wherein after the classifying circuit adds the target image into one of the plurality of image classes, the classifying circuit updates the information of the image class which the target image is added into.

9. An image classifying method, applied to an image classifying device, comprising:

   obtaining a target image from an image extracting device;
   obtaining, by a calculation circuit of the image classifying device, a feature vector of the target image;
   obtaining, by the calculation circuit, a first estimation result corresponding to the target image based on the information corresponding to the plurality of image classes and the feature vector;
   obtaining, by the calculation circuit, a second estimation result corresponding to the target image based on a reference image, wherein the reference image corresponds to one of the plurality of image classes; and
   adding, by a classifying circuit of the image classifying device, the target image into one of the plurality of image classes based on the first estimation result and the second estimation result.

10. The image classifying method of claim 9, wherein each image class comprises a plurality of groups of images.

11. The image classifying method of claim 10, further comprising:
    calculating, by the calculation circuit, shortest distances between the feature vector and each image class based on the feature vector and each cluster centroid of each group of each image class.

12. The image classifying method of claim 11, further comprising:

    when a minimum value of the shortest distances between the feature vector and each image class is above a threshold, abandoning, by the calculation circuit, the target image, or
    when a minimum value of the shortest distances between the feature vector and each image class is not above a threshold, by the calculation circuit calculates the first estimation result based on the shortest distances between the feature vector and each image class and a probability distribution algorithm.

13. The image classifying method of any of claims 9 to 12, further comprising:

    multiplying, by the classifying circuit, the first estimation result by the second estimation result to obtain a third estimation result; and
    adding by the classifying circuit, the target image into one of the plurality of image classes based on the third estimation result.

**14.** The image classifying method of any of claims 9 to 13, further comprising:

multiplying, by the classifying circuit, the first estimation result by a first weighted value to generate a first result;
multiplying, by the classifying circuit, the second estimation result by a second weighted value to generate a second result; and
adding, by the classifying circuit, the first result to the second result to generate a third estimation result; and
adding, by the classifying circuit, the target image into one of the plurality of image classes based on the third estimation result.

**15.** The image classifying method of any of claims 9 to 14, further comprising:
after the classifying circuit adds the target image into one of the plurality of image classes, updating, by the classifying circuit, the information of the image class which the target image was added into.

FIG. 1

```
                    ( Start )
                        │
                        ▼
    ┌───────────────────────────────────────────┐
    │   Obtaining a target image from an image   │── S210
    │             extracting device              │
    └───────────────────────────────────────────┘
              │                        │
              ▼                        ▼
    ┌──────────────────┐    ┌──────────────────────┐
    │ Obtaining a feature│   │  Obtaining a second  │
S220│vector corresponding│   │  estimation result   │
    │ to the target image│   │ corresponding to the │
    └──────────────────┘    │  target image based  │── S240
              │              │    on the HMM        │
              ▼              │  algorithm and a     │
    ┌──────────────────┐    │   reference image    │
    │  Obtaining a first │   └──────────────────────┘
    │ estimation result  │              │
    │corresponding to the│              │
    │ target image based │              │
    │ on the information of              │
S230│ a plurality of image│             │
    │  classes and the   │              │
    │   feature vector   │              │
    │corresponding to the│              │
    │   target image     │              │
    └──────────────────┘               │
              │                         │
              └───────────┬─────────────┘
                          ▼
    ┌───────────────────────────────────────────┐
    │  Adding the target image into one of the   │
    │ image classes based on the first estimation │── S250
    │ result and the second estimation result    │
    └───────────────────────────────────────────┘
                          │
                          ▼
                    ( End )
```

FIG. 2

Europäisches
Patentamt

European
Patent Office

Office européen
des brevets

# EUROPEAN SEARCH REPORT

Application Number

EP 22 18 6669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TW I 744 083 B (QUANTA COMP INC [TW]) 21 October 2021 (2021-10-21) <br> * figures 1, 2 * <br> * figure 3 * <br> * figure 4 * <br> * figure 5 * | 1-15 | INV. <br> G06V10/84 <br> G06V10/74 <br> G06V10/80 <br> G06V10/762 |
| X,P | US 2022/142739 A1 (CHENG KAI-JU [TW] ET AL) 12 May 2022 (2022-05-12) <br> * figures 1,2 * <br> * figure 3 * <br> * figure 4 * <br> * figure 5 * | 1-15 | |
| X | US 2021/074011 A1 (CHENG KAI-JU [TW] ET AL) 11 March 2021 (2021-03-11) | 1,2, 6-10, 13-15 | |
| A | * figure 2 * <br> * figure 3A * <br> * figure 4 * <br> * figure 7 * <br> * figure 11A * | 3-5,11, 12 | |
| | | | TECHNICAL FIELDS SEARCHED (IPC) |
| A | T. SONI MADHULATHA: "AN OVERVIEW ON CLUSTERING METHODS", IOSR JOURNAL OF ENGINEERING, vol. 02, no. 04, 1 April 2012 (2012-04-01) , pages 719-725, XP055119478, ISSN: 2278-8719, DOI: 10.9790/3021-0204719725 * the whole document * | 1-15 | G06V <br> G06F |

The present search report has been drawn up for all claims

| Place of search | Date of completion of the search | Examiner |
|---|---|---|
| The Hague | 24 May 2023 | Martinière, Anthony |

EPO FORM 1503 03.82 (P04C01)

## ANNEX TO THE EUROPEAN SEARCH REPORT
## ON EUROPEAN PATENT APPLICATION NO.

EP 22 18 6669

24-05-2023

| Patent document cited in search report | | Publication date | Patent family member(s) | | Publication date |
|---|---|---|---|---|---|
| TW I744083 | B | 21-10-2021 | CN | 114533324 A | 27-05-2022 |
| | | | EP | 3995072 A1 | 11-05-2022 |
| | | | TW | 202218638 A | 16-05-2022 |
| | | | US | 2022142739 A1 | 12-05-2022 |
| US 2022142739 | A1 | 12-05-2022 | CN | 114533324 A | 27-05-2022 |
| | | | EP | 3995072 A1 | 11-05-2022 |
| | | | TW | 202218638 A | 16-05-2022 |
| | | | US | 2022142739 A1 | 12-05-2022 |
| US 2021074011 | A1 | 11-03-2021 | CN | 112450861 A | 09-03-2021 |
| | | | EP | 3789957 A1 | 10-03-2021 |
| | | | TW | 202112120 A | 16-03-2021 |
| | | | US | 2021074011 A1 | 11-03-2021 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 111110045